(19) Europäisches Patentamt
European Patent Office
Office européen des brevets

(11) **EP 3 593 101 B1**

(12) **FASCICULE DE BREVET EUROPEEN**

(45) Date de publication et mention
de la délivrance du brevet:
**27.01.2021 Bulletin 2021/04**

(21) Numéro de dépôt: **18724959.4**

(22) Date de dépôt: **24.04.2018**

(51) Int Cl.:
**G01H 1/00** *(2006.01)*     **G01M 13/00** *(2019.01)*

(86) Numéro de dépôt international:
**PCT/FR2018/051015**

(87) Numéro de publication internationale:
**WO 2018/197797 (01.11.2018 Gazette 2018/44)**

(54) **PROCÉDÉ DE DÉTECTION D'UN DEFAUT D'UN CAPTEUR DE VIBRATION, DISPOSITIF ET PROGRAMME D'ORDINATEUR ASSOCIÉS**

VERFAHREN ZUR DETEKTION EINES DEFEKTS IN EINEM VIBRATIONSSENSOR, ZUGEHÖRIGE VORRICHTUNG UND COMPUTERPROGRAMM

METHOD FOR DETECTING A DEFECT IN A VIBRATION SENSOR, ASSOCIATED DEVICE AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2017 FR 1753648**

(43) Date de publication de la demande:
**15.01.2020 Bulletin 2020/03**

(73) Titulaire: **Safran**
**75015 Paris (FR)**

(72) Inventeurs:
  • **ABBOUD, Dany**
    **77550 Moissy-Cramayel (FR)**
  • **EL BADAOUI, Mohamed**
    **77550 Moissy-Cramayel (FR)**

(74) Mandataire: **Brevalex**
    **95, rue d'Amsterdam**
    **75378 Paris Cedex 8 (FR)**

(56) Documents cités:
**WO-A1-97/43729**

• **VICTOR GIRONDIN ET AL: "Vibration-Based Fault Detection of Accelerometers in Helicopters", 8TH IFAC SYMPOSIUM ON FAULT DETECTION, SUPERVISION AND SAFETY OF TECHNICAL PROCESSES, 29 août 2012 (2012-08-29), pages 720-725, XP055084680, ISSN: 1474-6670, DOI: 10.3182/20120829-3-MX-2028.00049 ISBN: 978-3-90-282309-0**
• **P. BORGHESANI ET AL: "Application of cepstrum pre-whitening for the diagnosis of bearing faults under variable speed conditions", MECHANICAL SYSTEMS AND SIGNAL PROCESSING, vol. 36, no. 2, 1 avril 2013 (2013-04-01), pages 370-384, XP055461483, AMSTERDAM, NL ISSN: 0888-3270, DOI: 10.1016/j.ymssp.2012.11.001**
• **L. Barbini ET AL: "Application of Cepstrum Prewhitening on Non-stationary Signals" In: "Advances in Condition Monitoring of Machinery in Non-Stationary Operations", 12 septembre 2016 (2016-09-12), Springer International Publishing, Cham, XP055461532, ISSN: 2363-698X ISBN: 978-3-319-61927-9 vol. 9, pages 275-283, DOI: 10.1007/978-3-319-61927-9_26, le document en entier**

## Description

### DOMAINE TECHNIQUE

Le domaine de l'invention est celui des systèmes de surveillance de l'état de santé d'une machine, telle qu'une turbomachine d'aéronef, notamment à des fins de maintenance prédictive. L'invention a trait à une surveillance de la machine par analyse des vibrations de celle-ci, et porte plus particulièrement sur la détection d'un défaut, notamment un défaut de fixation, d'un capteur de vibration utilisé pour réaliser une telle surveillance.

### ÉTAT DE LA TECHNIQUE ANTÉRIEURE

Les machines tournantes sont utilisées dans une large variété d'applications, comme le transport, le génie civil, la production industrielle, l'énergie, etc. Souvent, ces machines fonctionnent dans des environnements durs et sous des conditions opérationnelles sévères. Malgré une bonne fiabilité, ces systèmes mécaniques sont naturellement exposés à des dysfonctionnements. De tels dysfonctionnements peuvent non seulement accroitre significativement le coût de fonctionnement du système, mais peuvent également entraîner des risques graves pour les usagers.

Une solution pour optimiser le fonctionnement d'une machine tout en assurant la sécurité est la maintenance prédictive. Celle-ci est basée sur un système de surveillance dont le rôle est de produire des commandes pour des actions de maintenance à partir d'une analyse de différents types d'entrées mesurées par des capteurs (température, pression, vibrations, courant, tension, etc.). L'efficacité d'une telle approche repose donc principalement sur la précision et la fiabilité du système de surveillance.

Dans ce contexte, l'analyse vibratoire est une technique largement acceptée pour la surveillance de l'état de santé des machines dans une variété d'applications mécaniques. L'efficacité de cette approche résulte du fait que les vibrations des machines contiennent beaucoup d'informations sur les forces internes dans le système. Ces forces internes sont souvent liées à certains mécanismes de défauts et présentent des symptômes de vibration distinctifs désignés sous le nom de signatures mécaniques.

Les vibrations peuvent être mesurées avec différents types de capteurs, à savoir les capteurs de déplacement, de vitesse et d'accélération. Les accéléromètres sont les plus utilisés aujourd'hui car ils permettent l'observation d'une large gamme de fréquences, et sont robustes et disponibles dans une large gamme de tailles et de configurations.

Le capteur de vibration est fixé à proximité des éléments à surveiller (par exemple sur le palier d'un engrenage ou d'un roulement). Il est suivi d'une chaîne d'acquisition dont le rôle est de convertir le signal analogique du capteur en un signal numérique. Ce signal numérique, appelé « signal brut », comprend la composante liée au défaut, en plus d'autres composantes liées à d'autres sources. Il est traité par des méthodes mathématiques du signal (par exemple filtrage, analyse spectrale, outils statistiques, optimisation, etc.) afin d'identifier la présence de signatures vibratoires d'anomalies. Des indicateurs sont calculés à partir des signaux traités pour évaluer la progression de l'anomalie et quantifier sa sévérité. Les valeurs de ces indicateurs sont comparées à des seuils et, en conséquence, une décision est prise pour déclencher ou non une alarme.

Dans la plupart des applications, les capteurs de vibration sont fixés à l'aide d'un adhésif (par exemple colle cyanoacrylate, ruban adhésif double face, pétrocire, colle chaude). La fréquence naturelle d'un capteur de vibration dépend de la rigidité de la fixation, aussi le choix de l'adhésif est crucial pour une mesure précise. Les critères suivants sont ainsi considérés lors du choix de l'adhésif: la masse du capteur de vibration, la largeur de bande de fréquence nécessaire pour la mesure, l'amplitude attendue et la température au point de mesure. En réalité, même en respectant ces critères, les capteurs de vibration sont susceptibles de subir un décollement plus ou moins important en raison de fonctionnement dans des environnements durs et sous des conditions opérationnelles sévères (par exemple température, vitesse et couple élevés). Ce décollement peut affecter significativement la fonction de transfert du capteur et ses propriétés. Par conséquent, la structure des signaux mesurés peut être significativement modifiée et des fausses alarmes peuvent être déclenchées par le système de surveillance de l'état de santé de la machine.

Afin de réduire le taux des fausses alarmes et ainsi d'améliorer la fiabilité des systèmes de surveillance d'état de santé, on peut chercher à évaluer l'exactitude des mesures fournies par un capteur de vibration en venant en détecter un éventuel défaut, tel qu'un défaut de fixation.

Un défaut du capteur de vibration altère sa fonction de transfert du capteur en la rendant non-linéaire, ce qui se manifeste par une forte asymétrie dans le signal vibratoire. Il est ainsi possible, comme rapporté dans l'article de V. Girondin et al. intitulé « Vibration-based fault détection of accelerometers in helicopters », SAFEPROCESS - 8th IFAC Symposium on Fault Detection, Supervision and Safety of Technical Processes, Aug. 2012, Mexico City, Mexico. pp.720-725, 2012, de venir quantifier l'asymétrie du signal vibratoire et de présumer l'existence d'un défaut lorsque cette asymétrie excède un seuil.

Cet article propose d'utiliser une version améliorée d'un indicateur d'asymétrie classique (le *skewness*) basée sur l'optimisation d'un filtrage linéaire qui maximise la valeur du *skewness* du signal filtré. Cette valeur maximale est alors l'indicateur retenu pour détecter un défaut du capteur de vibration. L'optimisation du filtrage linéaire est un processus itératif gourmand en temps de calcul. Un autre document de l'art antérieur est WO9743729.

## EXPOSÉ DE L'INVENTION

L'invention a pour objectif d'améliorer la précision de la détection d'un défaut du capteur de vibration par quantification de l'asymétrie du signal vibratoire, et de là d'augmenter la fiabilité d'un système de surveillance de l'état de santé d'une machine par analyse vibratoire.

A cet effet, l'invention propose un procédé de détection d'un défaut d'un capteur de vibration, typiquement un accéléromètre, selon la revendication 1.

Certains aspects préférés mais non limitatifs de ce procédé sont les suivants :

- le blanchiment du signal vibratoire est un blanchiment cepstral ;
- le blanchiment cepstral du signal vibratoire comprend une transformée de Fourier du signal vibratoire, le calcul du module de ladite transformée, la division de ladite transformée par son module et une transformée de Fourier inverse du résultat de ladite division ;
- l'indicateur d'asymétrie s'exprime selon $\frac{|N^+ - N^-|}{N}$, avec $N^+$ le nombre de points aberrants positifs, $N^-$ le nombre de points aberrants négatifs et $N$ le nombre total de points aberrants $N = N^+ + N^-$ ;
- le capteur de vibration est installé au sein d'une machine, et le signal vibratoire est exploité par un système de surveillance de l'état de santé de la machine par analyse vibratoire lorsqu'aucun défaut du capteur de vibration n'est détecté.

L'invention s'étend à une unité de traitement de données comprenant des moyens configurés pour mettre en œuvre ce procédé, ainsi qu'à un système de surveillance de l'état de santé d'une machine par analyse vibratoire, ce système comprenant un capteur de vibration installé au sein de la machine et une unité de traitement de données selon l'invention couplée au capteur de vibration. L'invention porte aussi sur un produit programme d'ordinateur comprenant des instructions de code pour la mise en œuvre de ce procédé lorsque ledit programme est exécuté sur un ordinateur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma d'un système de surveillance de l'état de santé d'une machine par analyse vibratoire mettant en œuvre l'invention ;
- la figure 2 est un ordinogramme illustrant le procédé de détection d'un défaut d'un capteur de vibration selon l'invention ;
- la figure 3 illustre un mode de réalisation possible du blanchiment spectral réalisé dans le cadre de l'invention ;
- la figure 4 illustre un exemple de calcul possible d'indicateur d'asymétrie.

## EXPOSÉ DÉTAILLÉ DE MODES DE RÉALISATION PARTICULIERS

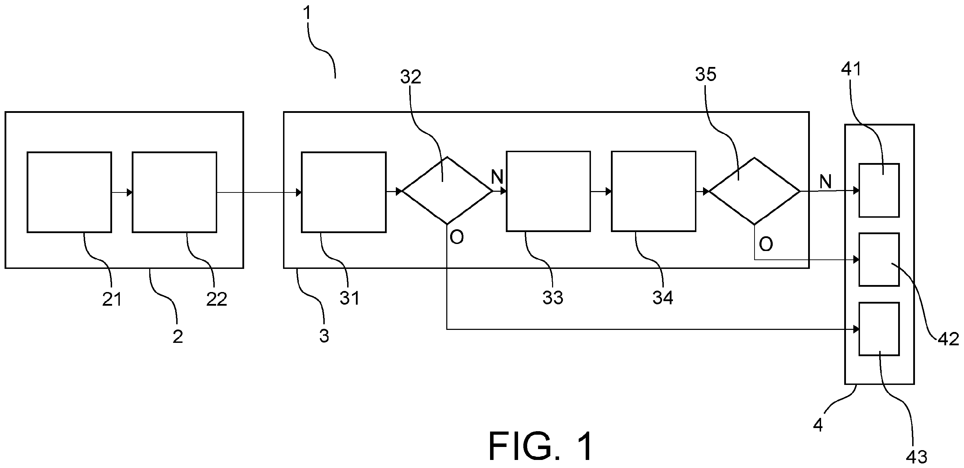

En référence à la figure 1, l'invention peut être mise en œuvre dans un système de surveillance 1 de l'état de santé d'une machine par analyse vibratoire. La machine peut être une machine tournante, une machine à combustion ou explosion, un banc d'essai. Une application privilégiée est celle de la surveillance de moteurs d'avions ou d'hélicoptères.

Le système 1 comprend une unité d'acquisition du signal vibratoire 2, une unité de calcul d'indicateurs d'état de santé 3 et une unité de restitution 4 permettant de fournir une indication sur l'état de la machine et du capteur de vibration.

L'unité d'acquisition 2 comprend un capteur de vibration 21 fixé à la machine sous surveillance à l'aide d'un adhésif, par exemple un accéléromètre, et une chaîne d'acquisition 22 du signal vibratoire délivré par le capteur de vibration 21. Le rôle de la chaîne d'acquisition est de convertir le signal analogique délivré par le capteur de vibration 21 en un signal numérique. La chaine comprend typiquement les éléments suivants : un conditionneur (amplification, isolation galvanique et d'excitation des capteurs passifs, etc.), un filtre analogique (pour limiter la bande passante du capteur et éviter ainsi la détérioration du rapport signal sur bruit et le repliement spectral), un échantillonneur bloqueur (qui prélève un échantillon du signal et le maintient constant pendant la phase de conversion) et un convertisseur analogique-numérique. Le signal vibratoire brut ainsi numérisé est transféré à l'unité de calcul 3.

L'unité de calcul 3 se distingue d'une unité classiquement utilisée en surveillance d'état de santé en ce qu'elle comporte un module 21 de détection d'un défaut du capteur de vibration configuré pour mettre en œuvre le procédé décrit par la suite. La sortie de ce module de détection de défaut capteur est évaluée par un premier module de test 32.

Si aucun défaut capteur n'est détecté (sortie « N » du premier module de test 32), le signal vibratoire fait l'objet d'un traitement numérique dans un module de traitement 33 et des indicateurs sont calculés à partir des signaux traités dans un module de calcul d'indicateurs 34. Les indicateurs calculés sont évalués par un second module de test 35 où ils sont confrontés à des seuils pour prendre une décision pour déclencher ou non une alarme (sorties « N » et « O » du second module de test 35), cette décision étant fournie par l'unité de restitution 4, typiquement un afficheur apte à présenter une information relative à un état sain de la machine sous surveillance (bloc 41) ou à un état défectueux via la levée d'une alarme (bloc 42).

Si un défaut capteur est détecté (sortie « O » du premier module de test 32), le signal vibratoire n'est pas traité et l'unité de restitution 4 présente une information relative à la présence d'un défaut capteur (bloc 43).

On décrit dans la suite le procédé de détection d'un éventuel défaut du capteur de vibration mis en œuvre dans le module de détection 21.

L'invention est basée sur le constat que la méthode divulguée dans l'article précité associe toute asymétrie dans le signal vibratoire à la présence d'un défaut du capteur de vibration. Or la Demanderesse observe que l'asymétrie d'un signal vibratoire n'est pas exclusivement liée à un défaut du capteur de vibration, mais peut également résulter de la non-linéarité du système mécanique et de la répartition des phases au niveau des harmoniques (sinusoïdes) du fait des vibrations périodiques générées par exemple par les engrenages. Dans un cas de fonctionnement sans défaut du capteur de vibration, le signal vibratoire présente donc une asymétrie qui risque d'être identifiée comme excessive et donc de générer une fausse alarme.

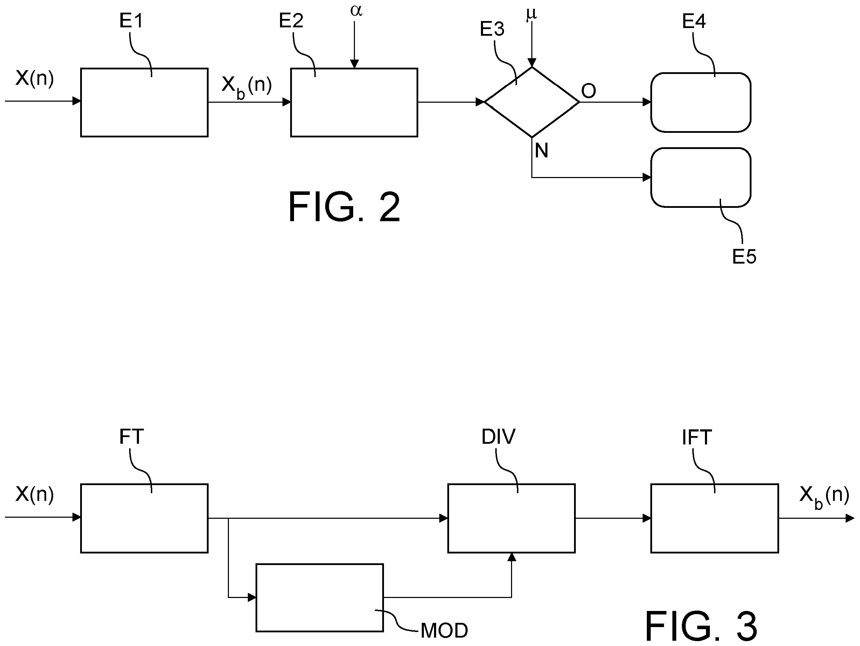

Afin de permettre de distinguer les différentes sources d'asymétrie, et en référence à la figure 2, le procédé comprend une première étape E1 de blanchiment spectral du signal vibratoire $X(n)$. Cette étape permet en effet de rejeter toute la composante déterministe du signal vibratoire et, par conséquent, l'asymétrie qu'elle induit. Dans ces conditions, l'asymétrie dans le signal vibratoire blanchi $X_b(n)$ peut être exclusivement assimilée à la présence d'un défaut du capteur de vibration.

La partie déterministe du signal vibratoire est périodique en régime stationnaire et présente donc un spectre fréquentiel discret. La partie aléatoire du signal vibratoire présente quant à elle un spectre fréquentiel continu. Le blanchiment spectral d'un signal consiste à en modifier le spectre de sorte à le rapprocher du spectre d'un bruit blanc. Le signal vibratoire blanchi présente ainsi une densité spectrale de puissance constante où les pics de l'enveloppe spectrale du signal vibratoire ont été uniformisés et où la contribution de la partie déterministe a par conséquent été gommée.

La séparation de la partie déterministe de la partie aléatoire du signal vibratoire peut notamment être réalisée au moyen d'un blanchiment cepstral qui permet de conserver les sources présentes dans la phase du signal vibratoire et d'éliminer toutes les sources qui se manifestent sur l'amplitude. Cette technique offre une capacité remarquable d'élimination aveugle du contenu déterministe d'un signal vibratoire tout en blanchissant son spectre. Cette technique consiste à mettre à zéro tout le cepstre complexe du signal en conservant seulement la composante relative à la quéfrence zéro. Le cepstre ainsi mis à zéro est ensuite transformé dans le domaine temporel, après recombinaison avec la phase du signe d'origine. On pourra trouver une description de cette technique de blanchiment cepstral dans l'article de P. Borghesani et al intitulé "Application of cepstrum pre-whitening for the diagnosis of bearing faults under variable speed conditions », Mech. Syst. Sig. Process. 36 (2013) 370-384.

De manière avantageuse, le blanchiment cepstral peut être réalisé sans calcul du cepstre en utilisant simplement la transformée de Fourier du signal vibratoire. Dans un tel cas de figure, et en référence à la figure 3, le blanchiment du signal vibratoire $X(n)$ comprend une transformée de Fourier FT du signal vibratoire, le calcul MOD du module de ladite transformée, la division DIV de ladite transformée par son module et une transformée de Fourier inverse IFT du résultat de ladite division. Avec $DFT$ la transformée de Fourrier discrète et $DFT^{-1}$ est la transformée inverse, l'opération de blanchiment spectral s'écrit comme $X_b(n) = DFT^{-1}\left\{ \dfrac{DFT\{X(n)\}}{|DFT\{X(n)\}|} \right\}$.

En référence à la figure 2, le procédé comprend une deuxième étape E2 de calcul d'un indicateur d'asymétrie du signal vibratoire blanchi. Ce calcul permet d'évaluer la non-linéarité de la fonction de transfert du capteur de vibration ou, vu différemment, la présence d'un défaut, telle qu'un défaut de fixation, du capteur de vibration.

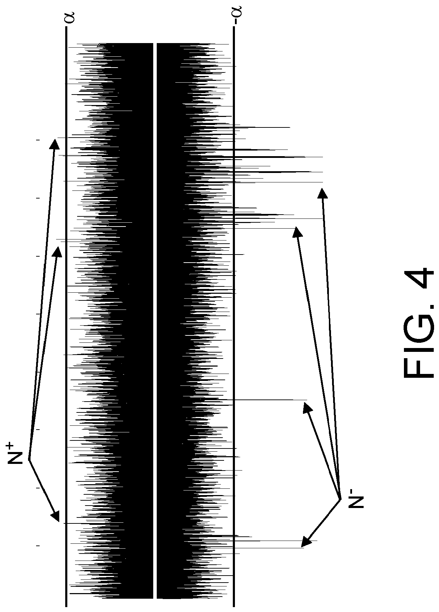

L'indicateur d'asymétrie est un compteur de points aberrants dans le signal vibratoire blanchi. Plus précisément, le compteur des points aberrants quantifie l'asymétrie à partir de la différence entre les points aberrants positifs et négatifs, ces points aberrants étant définis par rapport à un seuil symétrique dit seuil d'aberration. On désigne par $\alpha$ le seuil d'aberration, à savoir un entier positif plus petit que la valeur maximale de la valeur absolu du signal $X_b(n)$ : $0 < \alpha < \max(|X_b(n)|)$. On choisit par exemple un seuil d'aberration $\alpha$ égal au double de l'écart type des L échantillons considérés du signal vibratoire blanchi. Les points aberrants positifs et négatifs, désignés par $N^+$ et $N^-$ respectivement, sont définis comme (cf. figure 4) :

$$\begin{cases} N^+ = \sum_{n=1}^{L} I_{X_b(n) > \alpha} \\ N^- = \sum_{n=1}^{L} I_{X_b(n) < -\alpha} \end{cases}$$

où $I_{arg}$ désigne la fonction indicatrice (elle retourne 1 lorsque la condition $arg$ est vraie). Désignons par $N$ le nombre total des points aberrants positifs et négatifs ($N = N^+ + N^-$), le calcul de l'indicateur compteur des points aberrants comprend le calcul de la différence entre le nombre de points aberrants positifs et le nombre de points aberrants négatifs et peut être défini comme suit :

$$I_X = \frac{|N^+ - N^-|}{N}.$$

Cet indicateur $I_x$ est compris entre 0 et 1 et il n'est pas influencé par la direction de l'asymétrie. Il retourne 0 pour une symétrie parfaite et s'approche de 1 quand l'asymétrie est importante.

Cet indicateur $I_x$ s'avère plus performant que l'indicateur basé sur le skewness optimisé décrit dans l'article précité. En effet, contrairement à l'indicateur $I_x$, le skewness optimisé n'est ni normalisé ni borné, donc difficilement quantifiable. En outre, l'asymétrie se caractérise par des impulsions directionnelles. Or ces impulsions n'affectent pas la distribution empirique de probabilité du signal et ne sont pas détectés par le skewness. L'indicateur $I_x$ est quant à lui capable de détecter ce type particulier d'asymétrie. Etant plus sensible à l'asymétrie que le skewness, l'indicateur de l'invention permet d'améliorer la capacité de détection des défauts du capteur de vibration. Il est en outre simple à calculer.

Une fois l'indicateur d'asymétrie calculé, le procédé comprend une troisième étape E3 d'évaluation de l'asymétrie sur la base d'un test d'hypothèse sur l'indicateur $I_x$. En effet, même si le signal vibratoire blanchi est symétrique, l'indicateur ne retourne pas forcement une valeur exactement nulle. Cela est dû aux erreurs d'estimations (biais et variance de l'indicateur) résultants de la longueur fini du signal. On règle un seuil, dit seuil d'alarme μ, qui définit le niveau de confiance que l'on veut accorder à la valeur de l'indicateur. Ce seuil μ peut être calculé à partir des valeurs empiriques de l'indicateur $I_X$ calculées sur des cas de fonctionnement sain du capteur, ou alternativement par des calculs mathématique statistiques. Si la valeur de l'indicateur $I_X$ est en dessous du seuil d'alarme μ, le signal est considéré comme symétrique, sinon il est considéré comme asymétrique. Ainsi un défaut du capteur de vibration est détecté lorsque l'indicateur d'asymétrie $I_X$ excède le seuil d'alarme μ. Dans un tel cas de figure (« O » sur la figure 2), un message d'alerte peut être affiché lors d'une étape E4 par l'unité de restitution 4. Dans le cas contraire (« N » sur la figure 2), le capteur de vibration est considéré comme étant sain et le système de surveillance fonctionne normalement lors d'une étape E5 pour venir calculer des indicateurs d'anomalies qui seront confrontés à des seuils pour décider de la présence ou non d'un défaut dans la machine.

On retiendra que le procédé selon l'invention est rapide, facile à implémenter et ne requiert pas des signaux d'autres capteurs. Il permet en outre une détection robuste et précise de défauts grâce au blanchiment spectral permettant la séparation des sources d'asymétrie liées au fonctionnement sain ou défectueux du capteur de vibration. En outre, aucun historique n'est requis pour détecter le défaut, l'évaluation du signal vibratoire se faisant d'une façon indépendante aux mesures faites avant ou après. Enfin, l'indicateur compteur des points aberrants est plus sensible à l'asymétrie que le skewness et améliore donc la détectabilité des défauts capteur.

L'invention n'est pas limitée au procédé tel que précédemment décrit, mais s'étend également à une unité de traitement de données comprenant des moyens configurés pour mettre en œuvre ce procédé, ainsi qu'à un système de surveillance de l'état de santé d'une machine par analyse vibratoire qui comprend un capteur de vibration installé au sein de la machine et une telle unité de traitement de données couplée au capteur de vibration. L'invention porte aussi sur un produit programme d'ordinateur comprenant des instructions de code pour la mise en œuvre du procédé lorsque ledit programme est exécuté sur un ordinateur.

**Revendications**

1. Procédé de détection d'un défaut d'un capteur de vibration (11) comprenant le blanchiment spectral (E1) d'un signal vibratoire ($X(n)$) délivré par le capteur de vibration et le calcul (E2) d'un indicateur d'asymétrie du signal vibratoire blanchi ($X_b(n)$), dans lequel le calcul de l'indicateur d'asymétrie comprend un comptage d'un nombre de points aberrants positifs et d'un nombre de points aberrants négatifs dans le signal vibratoire blanchi, un point du signal vibratoire blanchi étant un point aberrant positif ou négatif lorsque sa valeur absolue est supérieure à un seuil d'aberration ($\alpha$), et le calcul de la différence entre le nombre de points aberrants positifs et le nombre de points aberrants négatifs, le procédé comprenant en outre une étape dans laquelle un défaut du capteur de vibration (11) est détecté lorsque l'indicateur d'asymétrie excède un seuil d'alarme ($\mu$).

2. Procédé selon la revendication 1, dans lequel le blanchiment du signal vibratoire est un blanchiment cepstral.

3. Procédé selon la revendication 2, dans lequel le blanchiment cepstral du signal vibratoire comprend une transformée de Fourier (FT) du signal vibratoire, le calcul du module (MOD) de ladite transformée, la division (DIV) de ladite transformée par son module et une transformée de Fourier inverse (IFT) du résultat de ladite division.

4. Procédé selon l'une des revendications 1 à 3, dans lequel l'indicateur d'asymétrie s'exprime selon $\frac{|N^+ - N^-|}{N}$, avec $N^+$ le nombre de points aberrants positifs, $N^-$ le nombre de points aberrants négatifs et *N* le nombre total de points aberrants $N = N^+ + N^-$.

5. Procédé selon l'une des revendications 1 à 4, dans lequel le capteur de vibration est installé au sein d'une machine, et dans lequel le signal vibratoire est exploité par un système de surveillance (1) de l'état de santé de la machine par analyse vibratoire lorsqu'aucun défaut du capteur de vibration n'est détecté.

6. Unité de traitement de données (3) comprenant des moyens (31) configurés pour mettre en œuvre le procédé selon l'une des revendications 1 à 5.

7. Système de surveillance (1) de l'état de santé d'une machine par analyse vibratoire, comprenant un capteur de vibration (11) installé au sein de la machine et une unité de traitement de données (3) selon la revendication 6 couplée au capteur de vibration.

8. Système selon la revendication 7 dans lequel le capteur de vibration est un accéléromètre.

9. Produit programme d'ordinateur comprenant des instructions de code pour la mise en œuvre du procédé selon l'une des revendications 1 à 5, lorsque ledit programme est exécuté sur un ordinateur.

**Patentansprüche**

1. Verfahren zur Detektion eines Defekts in einem Vibrationssensor (11), mit der Spektralaufhellung (E1) eines Vibrationssignals (*X(n)*), das von dem Vibrationssensor geliefert wird, und der Berechnung (E2) eines Asymmetrie-Indikators des aufgehellten Vibrationssignals (*$X_b(n)$*), wobei die Berechnung des Asymmetrie-Indikators eine Zählung einer Anzahl von positiven Ausreißern und einer Anzahl von negativen Ausreißern in dem aufgehellten Vibrationssignal umfasst, wobei ein Punkt des aufgehellten Vibrationssignals ein positiver oder ein negativer Ausreißer ist, wenn sein absoluter Wert größer als ein Abweichungsschwellenwert ($\alpha$) ist, und die Berechnung der Differenz zwischen der Anzahl von positiven Ausreißern und der Anzahl von negativen Ausreißern umfasst, wobei das Verfahren außerdem einen Schritt aufweist, in welchem ein Defekt des Vibrationssensors (11) erfasst wird, wenn der Asymmetrie-Indikator eine Alarmschwelle ($\mu$) überschreitet.

2. Verfahren nach Anspruch 1, wobei die Aufhellung des Vibrationssignals eine Cepstral-Aufhellung darstellt.

3. Verfahren nach Anspruch 2, wobei die Cepstral-Aufhellung des Vibrationssignals eine Fourier-Transformation (FT) des Vibrationssignals, die Berechnung des Moduls (MOD) dieser Transformation, die Teilung (DIV) dieser Transformation durch ihr Modul sowie eine umgekehrte Fourier-Transformation (IFT) des Ergebnisses dieser Teilung umfasst.

4. Verfahren nach einem der Ansprüche 1 bis 3, wobei der Asymmetrie-Indikator als $\frac{|N^+ - N^-|}{N}$ ausgedrückt wird, wobei $N^+$ die Anzahl der positiven Ausreißer darstellt, $N^-$ die Anzahl der negativen Ausreißer darstellt und $N$ die Gesamtzahl der Ausreißer $N = N^+ + N^-$ darstellt.

5. Verfahren nach einem der Ansprüche 1 bis 4, wobei der Vibrationssensor in eine Maschine eingebaut ist, und wobei das Vibrationssignal von einem System zur Überwachung (1) des Funktionszustands der Maschine durch Vibrationsanalyse genutzt wird, wenn kein Defekt des Vibrationssensors erfasst wird.

6. Datenverarbeitungseinheit (3) mit Mitteln (31), die dazu konfiguriert sind, das Verfahren nach einem der Ansprüche 1 bis 5 durchzuführen.

7. System zur Überwachung (1) des Funktionszustands einer Maschine durch Vibrationsanalyse, mit einem Vibrationssensor (11), der in die Maschine eingebaut ist, und einer Datenverarbeitungseinheit (3) nach Anspruch 6, die mit dem Vibrationssensor gekoppelt ist.

8. System nach Anspruch 7, wobei der Vibrationssensor ein Beschleunigungsmesser ist.

9. Computerprogramm-Produkt mit Codeanweisungen für die Durchführung des Verfahrens nach einem der Ansprüche 1 bis 5, wenn das Programm auf einem Computer ausgeführt wird.

**Claims**

1. Method for detecting a defect in a vibration sensor (11), comprising the spectral whitening (E1) of a vibratory signal (*X(n)*) delivered by the vibration sensor and the calculation (E2) of an indicator of asymmetry in the whitened vibratory signal (*$X_b(n)$*), wherein the calculation of the asymmetry indicator comprises the calculation of a number of positive aberrant points and a number of negative aberrant points in the whitened vibratory signal, a point in the whitened vibratory signal being a positive or negative aberrant point when the absolute value thereof is higher than an aberration threshold ($\alpha$), and the calculation of the difference between the number of positive aberrant points and a number of negative aberrant points, the method further comprising a step in which a defect in the vibration sensor (11) is detected when the asymmetry indicator exceeds an alarm threshold ($\mu$).

2. Method according to claim 1, wherein the whitening of the vibratory signal is a cepstral whitening.

3. Method according to claim 2, wherein the cepstral whitening of the vibratory signal comprises a Fourier transform (FT) of the vibratory signal, the calculation of the modulus (MOD) of said transform, the division (DIV) of said transform by its modulus and an inverse Fourier transform (IFT) of the result of said division.

4. Method according to any of claims 1 to 3, wherein the asymmetry indicator is expressed in accordance with $\frac{|N^+ - N^-|}{N}$, with $N^+$ the number of positive aberrant points, $N^-$ the number of negative aberrant points and $N$ the total number of aberrant points $N = N^+ + N^-$.

5. Method according to any of claims 1 to 4, wherein the vibration sensor is installed in a machine, and wherein the vibratory signal is exploited by a system (1) for monitoring the health condition of the machine by vibratory analysis when no defect in the vibration sensor is detected.

6. Data processing unit (3) comprising means (31) configured to implement the method according to any of claims 1 to 5.

7. System (1) for health monitoring a machine by vibratory analysis, comprising a vibration sensor (11) installed in the machine and a data processing unit (3) according to claim 6 coupled to the vibration sensor.

8. System according to claim 7, wherein the vibration sensor is an accelerometer.

9. Computer program product comprising code instructions for the implementation of the method according to any of claims 1 to 5, when said program is executed on a computer.

FIG. 1

FIG. 2

FIG. 3

EP 3 593 101 B1

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9743729 A

**Littérature non-brevet citée dans la description**

- **V. GIRONDIN et al.** Vibration-based fault détection of accelerometers in helicopters. *SAFEPROCESS - 8th IFAC Symposium on Fault Detection, Supervision and Safety of Technical Processes,* Août 2012, 720-725

- **P. BORGHESANI et al.** Application of cepstrum pre-whitening for the diagnosis of bearing faults under variable speed conditions. *Mech. Syst. Sig. Process.,* 2013, vol. 36, 370-384